# EUROPEAN PATENT SPECIFICATION

(11) **EP 1 544 317 B1**
(45) Date of publication and mention of the grant of the patent: **04.08.2010**
(21) Application number: 03798439.0
(22) Date of filing: 22.09.2003
(51) Int. Cl.: C23C 8/02, C23C 8/36, F16G 5/16

(54) **METHOD OF NITRIDING METAL RING AND APPARATUS THEREFOR**
VERFAHREN ZUM NITRIEREN VON METALLRINGEN UND VORRICHTUNG DAFÜR
PROCEDE DE NITRURATION D'UN ANNEAU METALLIQUE ET APPAREIL CORRESPONDANT

(30) Priority: 24.09.2002 JP 2002277898; 15.04.2003 JP 2003109727; 15.04.2003 JP 2003109728
(43) Date of publication of application: 22.06.2005
(73) Proprietor: HONDA GIKEN KOGYO KABUSHIKI KAISHA, Minato-ku, Tokyo 107-8556 (JP)
(72) Inventor: SUZUKI, Teiji, Sayama-shi, Saitama 350-1331 (JP); SARUYAMA, Masaomi, Sayama-shi, Saitama 350-1331 (JP); TAKAGAKI, Masashi, Sayama-shi, Saitama 350-1331 (JP); NARITA, Naoki, Sayama-shi, Saitama 350-1331 (JP)
(74) Representative: Cheyne, John Robert Alexander M.
(86) International application number: PCT/JP2003/012081
(87) International publication number: WO 2004/029320

(56) References cited:
- EP-A- 0 516 899
- EP-A- 0 744 471
- EP-A- 1 176 224
- EP-A1- 0 408 168
- JP-A- 10 212 565
- JP-A- 2000 087 214
- JP-A- 2000 104 159

## Description

### Technical Field

The present invention relates to a method of nitriding a metal ring made of maraging steel, which is used for a belt for continuously variable transmission and the like, and an apparatus therefor.

### Background Art

There is known a belt for CVT, which is obtained by laminating multiple metal rings to form a laminated ring and combining the laminated ring with a certain shaped element. It is conventionally used for power transmission of continuously variable transmission (CVT) of an automobile or the like.

A metal ring forming the above laminated ring consists of low-carbon steel comprising Ni and Mo, such as maraging steel. The metal ring is produced, for example, by cutting a thin plate of the above low-carbon steel into a rectangle, rounding the thin plate along the long side, welding one edge on the short side to the other edge on the other short side to form a cylindrical drum, and cutting the drum to a certain width, so as to obtain an endless ring. The endless ring is rolled to a thickness of approximately 0.1 to 0.3 mm, and it is then subjected to circumference correction to have a certain circumference, so that the above metal ring can be produced.

The above maraging steel is ultra strength steel, which has both high strength and high toughness, when the maraging steel is heated at an appropriate temperature and is subjected to age hardening in a martensite state. Accordingly, it is appreciated to use the maraging steel for the above metal ring. However, when a belt for CVT consisting of a laminated ring obtained by laminating the above metal rings is used for power transmission of CVT, the belt for CVT is stretched between a pair of pulleys, which can flexibly change V-groove pitch. Accordingly, when the above belt for CVT travels between the above pulleys, the above metal ring takes a linear shape, and when the belt travels along the pulleys, it takes a curved shape. Thus, the metal ring is exposed to severe bending deformation due to repetition of the above linear and bending states.

Thus, the above metal ring is required to also have abrasion resistance and fatigue resistance strength, as well as high strength and high toughness obtained by age hardening of the above maraging steel. For this purpose, the metal ring is subjected to a surface hardening processing after the age hardening processing.

The surface hardening processing is generally carried out by performing nitriding processing to the metal ring, so as to form a nitrided layer on the surface thereof. Examples of such a nitriding processing include a gas nitriding and a gas nitrocarburizing.

By performing the above gas nitriding or gas nitrocarburizing, nitrogen generated as a result of the decomposition of ammonia penetrates into the metal tissues of maraging steel. As a result, a nitrided layer is formed and hardened on the surface of the metal ring, thereby improving the abrasion resistance and fatigue resistance strength of the metal ring.

In order that nitrogen penetrates into the metal tissues of the maraging steel, it is required that the surface of the metal ring is activated. However, there is a problem in that when an oxide film is present on the surface of the metal ring, the above nitrided layer is not uniformly formed. To solve this problem, Japanese Patent Publication No. 8-9766 discloses a technique of replacing the oxide film with a fluoride film by heating the metal ring under an atmosphere containing a fluorine compound or fluorine prior to the gas nitriding or gas nitrocarburizing.

According to the above technique, when the metal ring on which the fluoride film is formed is subjected to gas nitriding or gas nitrocarburizing, the surface of the metal ring is activated, while the fluoride film is decomposed and eliminated. Then, nitrogen penetrates into the activated metal surface, so that a uniformed nitrided layer is formed.

However, in the above gas nitriding or gas nitrocarburizing, ammonia is decomposed into hydrogen and nitrogen, and the hydrogen is reacted with fluorine generated as a result of the decomposition of the above fluoride film, so as to form hydrogen fluoride having strong oxidizing ability. As a result, the surface of the metal ring is damaged by hydrogen fluoride, and it becomes difficult to laminate the above metal rings and to use the laminated ring for a belt for CVT.

In order to promote the decomposition of ammonia during the above gas nitriding or gas nitrocarburizing so as to form a nitrided layer with an excellent hardness, for example, Japanese Patent Laid-Open No. 62-270761 discloses a technique of maintaining a steel material at a temperature of 500°C to 600°C for 120 to 360 hours under an atmosphere containing 40% to 90% ammonia by volume, 0.2% to 3% oxygen by volume, and a residual volume consisting of nitrogen. This technique is applied for nitriding steel materials such as those used for a metal mold for plastic molding. It is claimed that a nitrided layer is formed to 0.25 mm deep from the surface by nitriding them under the above conditions, thereby improving the hardness thereof.

However, since it is desired that the metal ring has an excellent hardness on the surface thereof and maintains high toughness even after the above nitrided layer is formed thereon, the metal ring is required to comprise a non-nitrided portion in the nitrided layer. Accordingly, if the above technique is applied to the above metal ring, it could cause a problem that the nitrided layer is formed through the full thickness of the metal ring so that it becomes difficult to maintain high toughness after formation of the nitrided layer.

In order to solve this problem, the present applicant has already filed a patent application regarding a technique of controlling the thickness of the nitrided layer formed on the surface of the metal ring to from 20% to 40% of the full thickness of the metal belt by carrying out gas nitriding or gas nitrocarburizing as described above (refer to Japanese Patent Laid-Open No. 2000-337453). According to this technique, the metal ring is maintained under an atmosphere consisting of ammonia and nitrogen or atmosphere consisting of ammonia and an RX gas, for example, at a temperature ranging between 450°C and 500°C for 60 to 90 minutes. According to this technique, a non-nitrided portion remains within the metal ring, and the metal ring can have high toughness maintained in this portion.

However, it is desired to further improve the toughness of the above metal ring.

EP0516899 discloses a method and apparatus for forming a nitride layer in which a steel work is fluorided by heating the steel work in a first compartment containing a mixed gas composed of fluorine gas and inert gas. The mixed gas is then exhausted from the first compartment and the metal work is transferred to a second compartment where it is heated in a nitriding gas. The nitriding gas is then exhausted from the second compartment and the steel work is returned to the first compartment for cooling.

JP2000087214 discloses a method of nitriding steel in which the steel is first heated in an atmosphere containing fluorine to form a fluoride film on the surface of the steel. The steel is subsequently heated in a nitriding atmosphere to form a nitride layer, composed of nitride only, on the surface of the steel and a diffused lower layer.

JP10212565 discloses a method and a device for performing a nitriding treatment. A fluoriding treatment is performed to remove an oxidized coating from the material to be treated followed by a nitriding treatment. The nitriding treatment is preceded by a temporary nitriding treatment to form a temporary nitrided layer.

### Disclosure of the Invention

It is an object of the present invention to solve such an inconvenience and to provide a nitriding processing method, which enables to eliminate an oxide film from the surface of a metal ring made of maraging steel so as to activate the metal surface without damaging the surface, and which also enables to impart excellent hardness and toughness to the metal ring.

It is another object of the present invention to provide a nitriding apparatus that is suitable for carrying out the above nitriding processing method.

To achieve the above objects, the nitriding processing method of the present invention comprises the steps of: heating a metal ring made of maraging steel in the presence of a halogen compound gas, so as to eliminate an oxide film from the surface of the metal ring and to form a halogenous compound film; heating the metal ring made of maraging steel on which the above halogenous compound film is formed under a vacuum or reduced pressure atmosphere, so as to eliminate the above halogenous compound film; and heating the metal ring made of maraging steel from which the above halogenous compound film is eliminated in the presence of an ammonia gas, so as to carry out a nitriding processing.

In the nitriding processing method of the present invention, first, a metal ring made of maraging steel is heated in the presence of a halogen compound gas. By this step, an oxide film present on the surface of the metal ring made of maraging steel is reacted with the halogen compound and eliminated therefrom, and instead, a halogenous compound film is formed on the metal ring surface. Examples of an available halogen compound gas may include a fluorine compound gas, a chlorine compound gas, and a bromine compound gas.

Thereafter, the metal ring made of maraging steel on which the above halogenous compound film is formed is heated under a vacuum or reduced pressure atmosphere. By this step, the above halogenous compound film is decomposed and eliminated. In the nitriding processing method of the present invention, ammonia is not present during this step, and therefore, halogen generated as a result of the decomposition of the halogenous compound film is eliminated as a halogen gas, without generating acid. As a result, either the above oxide film or a halogenous compound film is not present on the surface of the metal ring, and the surface becomes extremely clean and activated.

Thus, thereafter, the metal ring made of maraging steel from which the halogenous compound film is eliminated is heated in the presence of an ammonia gas to carry out a nitriding processing, so that a uniformed nitrided layer can be formed without damaging the surface of the metal ring. The above nitriding processing that is carried out in the presence of an ammonia gas may be either a gas nitriding or gas nitrocarburizing.

In the nitriding processing method of the present invention, the elimination of the above halogenous compound film is preferably carried out by heating the metal ring made of maraging steel, on which the above halogenous compound film is formed, under a vacuum or reduced pressure atmosphere at a temperature ranging between 450°C and 490°C for 5 to 10 minutes.

If the temperature is lower than 450°C, it may become difficult to carry out the nitriding processing after the elimination of the halogenous compound film. In contrast, if the temperature exceeds 490°C, residual stress may become excessively large. Moreover, if the heating time is shorter than 5 minutes, it becomes difficult to exhaust the generated halogen gas. In contrast, if it exceeds 10 minutes, residual stress decreases and it becomes difficult to obtain sufficient strength.

In addition, in the nitriding processing method of the present invention, the nitriding processing is preferably carried out by maintaining a metal ring made of maraging steel under an atmosphere comprising at least ammonia at a processing temperature ranging between 450°C and 500°C for a processing time ranging between 30 and 120 minutes.

The nitriding processing cannot be carried out at a processing temperature of lower than 450°C. On the other hand, if the processing temperature exceeds 500°C, aging further progresses by heating in the nitriding processing, and it becomes overaging. As a result, martensite is deposited, and hardness decreases. Moreover, if the processing time is shorter than 30 minutes, the nitriding processing cannot be carriedout. If it exceeds 120 minutes, however, aging further progresses by heating in the nitriding processing, and it becomes overaging. As a result, martensite is deposited, and hardness decreases.

The above nitriding processing preferably comprises the steps of: placing the above metal ring into a heating furnace and raising the temperature inside the heating furnace to the processing temperature; introducing a first mixed gas consisting of 50% to 90% ammonia by volume, 0.1% to 0.9% oxygen by volume, and a residual volume substantially consisting of nitrogen into the above heating furnace having the raised processing temperature, and maintaining the process temperature, so as to form a nitrided layer on the surface of the metal ring; and when the one-third to one-half of the processing time has passed, replacing the atmosphere inside the above heating furnace by a second mixed gas consisting of 0% to 25% ammonia by volume and a residual volume consisting of nitrogen, and maintaining the processing temperature until the remaining processing time passes.

In the above nitriding processing method, first, a metal ring made of maraging steel is placed into a heating furnace, and the temperature inside the heating furnace is raised to a processing temperature ranging between 450°C and 500°C. If the temperature inside the heating furnace is lower than 450°C, the nitriding processing cannot be carried out. If it exceeds 500°C, aging further progresses by heating in the nitriding processing, and it becomes overaging. As a result, martensite is deposited, and hardness decreases.

Thereafter, when the temperature inside the heating furnace reaches the above range of processing temperature, the first mixed gas consisting of 50% to 90% ammonia by volume, 0.1% to 0.9% oxygen by volume, and a residual volume substantially consisting of nitrogen is introduced into the above heating furnace, and the above process temperature is maintained.

By this step, nitrogen generated as a result of the decomposition of the above ammonia is diffused in the metal ring, so that a nitrided layer is formed on the surface of the metal ring. At the same time, hydrogen as well as nitrogen is generated as a result of the decomposition of the above ammonia. If the partial pressure of hydrogen increases, the decomposition of ammonia is inhibited, or hydrogen binds to nitrogen again, thereby inhibiting nitriding.

Thus, in the above nitriding method, the first mixed gas comprises oxygen in the above range of amount, so that the hydrogen is bound to the oxygen to be eliminated as water from the system. As a result, the decomposition of ammonia can be promoted.

If the amount of ammonia contained in the first mixed gas is less than 50% by volume, a nitrided layer cannot be sufficiently formed, thereby not imparting a desired hardness to the surface of the metal ring. On the other hand, if the amount of ammonia exceeds 90% by volume, an excessive amount of nitrogen is generated, compounds such as iron nitride are formed in the metal tissues of the metal ring, and nitriding cannot be carried out uniformly. This is not preferable.

Moreover, if the amount of oxygen contained in the first mixed gas is less than 0 .1% by volume, the effect of eliminating hydrogen by biding oxygen to hydrogen cannot be sufficiently obtained. On the other hand, if the amount of oxygen exceeds 0.9% by volume, oxide is formed in the metal tissues of the metal ring, or the decomposition of ammonia is excessively promoted, thereby generating an excessive amount of nitrogen. This is not preferable.

When one-third to one-half of the processing time ranging from 30 to 120 minutes has passed, it is determined that the nitrided layer should have been formed on the metal ring. Then, the atmosphere inside the above heating furnace is replaced by the second mixed gas consisting of 0% to 25% ammonia by volume and a residual volume consisting of nitrogen, and the processing temperature is maintained until the remaining processing time passes.

By replacing the atmosphere inside the heating furnace by the above second mixed gas, a portion of nitrogen contained in the above nitrided layer evaporates into the atmosphere and so it is eliminated from the metal ring, and another portion of nitrogen is diffused further inside the metal ring. As a result, there is formed on the surface of the metal ring a nitrided layer, which has a structure such that the hardness decreases at a certain constant level depending on the depth from the surface and which has an excellent toughness as well as an excellent hardness.

If the atmosphere inside the above heating furnace is replaced by the second mixed gas before at least the one-third of the processing time passes, the formation of the above nitrided layer becomes insufficient, and a desired hardness might not be obtained on the surface of the metal ring. On the other hand, if the above replacement is carried out after the one-half of the processing time has passed, the above nitrided layer is excessively formed in the metal ring, and a sufficient toughness might not be obtained.

If the amount of ammonia contained in the second mixed gas exceeds 25% by volume, either the effect of eliminating a portion of nitrogen contained in the nitrided layer from the metal ring or the effect of diffusing another portion of nitrogen further inside the metal ring cannot be attained.

By performing the above step, in addition to toughness maintained at a non-nitrided portion in the metal ring, toughness can be obtained from the nitrided layer in the above structure. Thus, the toughness of the metal ring can be further improved.

As oxygen contained in the above first mixed gas, an oxygen containing gas such as air can be used instead of pure oxygen, and thus, cost can be reduced. The above air consists of 20% oxygen by volume, a very small volume of other ingredients, and a residual volume substantially consisting of nitrogen, and so it is conveniently used.

When air is used instead of pure oxygen, the above first mixed gas may consist of 50% to 90% ammonia by volume, 0.5% to 4.5% air by volume, and a residual volume consisting of nitrogen.

The nitriding apparatus nitrides the metal ring made of maraging steel by heating a maraging steel in the presence of a halogen compound gas to remove an oxide film formed on the surface of the metal ring, and maintaining the metal ring under an atmosphere comprising at least ammonia at a processing temperature ranging from 450°C to 500°C for a processing time ranging from 30 to 120 minutes. The nitriding apparatus comprises a preheating chamber and a nitriding chamber. The preheating chamber comprises a first heating means for heating the interior of the preheating chamber after accommodating the metal ring therein, a halogen compound gas introducing means for introducing a halogen compound gas into the preheating chamber, and a first exhaust means comprising a low-vacuum pump suitable for exhausting the atmosphere inside the preheating chamber and for reducing the pressure in the preheating chamber to below 10⁻³ Pa. The preheating chamber is heated by the first heating means in the presence of the halogen compound gas introduced by the halogen compound gas introducing means so as to remove an oxide film from the surface of the metal ring and form a halogen compound film on the metal ring, is discharged of the atmosphere therein by the first exhaust means so as to reduce the pressure therein after the oxide film is formed on the surface of the metal ring, is heated by the first heating means under a vacuum or reduced pressure atmosphere so as to remove the halogen compound film from the metal ring, and is heated by the first heating means to the processing temperature after the halogen compound film is removed from the metal ring. The nitriding chamber comprises a second heating means for heating the interior of the nitriding chamber to the processing temperature and maintaining the temperature therein, a nitrogen gas introducing means for introducing nitrogen gas into the nitriding chamber, an oxygen gas introducing means for introducing oxygen gas into the nitriding chamber, and a second exhaust means for exhausting the atmosphere inside the nitriding chamber. First, the nitriding chamber accommodates the metal ring transferred into the nitriding chamber from the preheating chamber under the atmosphere of a first mixed gas consisting of 50% to 90% by volume of ammonia, 0.1% to 0.9% by weight of oxygen, and a residual volume substantially consisting of nitrogen, the first mixed gas generated from the nitrogen gas introduced by the nitrogen gas introducing means, the ammonia gas introduced by the ammonia gas introducing means and the oxygen gas introduced by the oxygen gas introducing means, so as to form a nitride layer on the surface of the metal ring. Then, the nitriding chamber is discharged of the first mixed gas by the second exhausting means after 1/3 to 1/2 of the processing period has elapsed and is provided with the atmosphere of a second mixed gas consisting of 0 to 25% by volume of ammonia, and a residual volume consisting of nitrogen, the second mixed gas generated from the ammonia gas introduced by the ammonia gas introducing means and nitrogen gas introduced by the nitrogen gas introducing means, so as to replace the atmosphere of the first mixed gas inside the nitriding chamber with the second mixed gas. Thereafter, the nitriding chamber maintains the metal ring therein under the atmosphere of the mixed gas until the remaining processing time has elapsed.

In the nitriding apparatus of the present invention, first, the above metal ring made of maraging steel is placed in the above preheating chamber. In the above preheating chamber, a halogen compound gas has already been introduced by the above halogen compound gas introducing means. The preheating chamber is heated by the above first heating means under the halogen compound gas atmosphere, so that an oxide film is eliminated from the surface of the metal ring and that a halogenous compound film is formed instead.

Thereafter, the atmosphere is exhausted from the above preheating chamber by the above first exhausting means to reduce the pressure in the above preheating chamber to a vacuum or reduced pressure atmosphere, the inside of the preheating chamber is heated by the above first heating means to a temperature ranging between 450°C and 490°C, and the temperature is maintained for 5 to 10 minutes, so as to eliminate the above halogen compound. As a result, the surface of the metal ring becomes extremely clean and activated, having neither oxide film nor halogenous compound film.

Thereafter, the inside of the preheating chamber is heated by the first heating means. After the temperature is raised to a processing temperature ranging between 450°C and 500°C, the metal ring is transferred from the preheating chamber into the nitriding chamber.

In the above nitriding chamber, a nitrogen gas, an ammonia gas, and an oxygen gas have already been introduced by the above nitrogen gas introducing means, the above ammonia gas introducing means, and the above oxygen gas introducing means, respectively. As a result, in the nitriding chamber, a first mixed gas consisting of 50% to 90% ammonia by volume, 0.1% to 0.9% oxygen by volume, and a residual volume substantially consisting of nitrogen is generated from each of the above gases. Moreover, the inside of the nitriding chamber is heated by the above second heating means and it is maintained at the processing temperature ranging between 450°C and 500°C.

Thus, the metal ring transferred from the preheating chamber into the nitriding chamber is maintained at the above range of processing temperature under the first mixed gas atmosphere. The above oxygen gas introducing means may introduce either a pure oxygen gas or gas containing oxygen such as air, as long as the gas is capable of generating the above first mixed gas.

Thereafter, in the nitriding chamber, a nitrided layer is formed on the surface of the metal ring. When the one-third or one-half of the above processing time has passed, the first mixed gas is exhausted by the above second exhausting means. Thereafter, a nitrogen gas and an ammonia gas are newly introduced into the nitriding chamber by the above nitrogen gas introducing means and the above ammonia gas introducing means, respectively, and then, a second mixed gas consisting of 0% to 25% ammonia by volume and a residual volume consisting of nitrogen is generated from these gases. As a result, the atmosphere in the nitriding chamber is replaced by the above second mixed gas.

Thereafter, the metal ring is maintained in the above nitriding chamber under the second mixed gas atmosphere until the remaining processing time passes.

As a result, the nitriding processing is advantageously carried out using the nitriding apparatus of the present invention.

### Brief Description of the Drawings

FIG. 1 is an illustrative view, which schematically shows the production process of a metal ring used for a belt for CVT;
FIG. 2 is a process diagram showing the nitriding method in the present embodiment;
FIG. 3 is a graph showing the relationship between a depth from the surface of the metal ring and hardness; and
FIG. 4 is a system block diagram showing the configuration of the nitriding apparatus in the present embodiment.

### Best Mode for Carrying Out the Invention

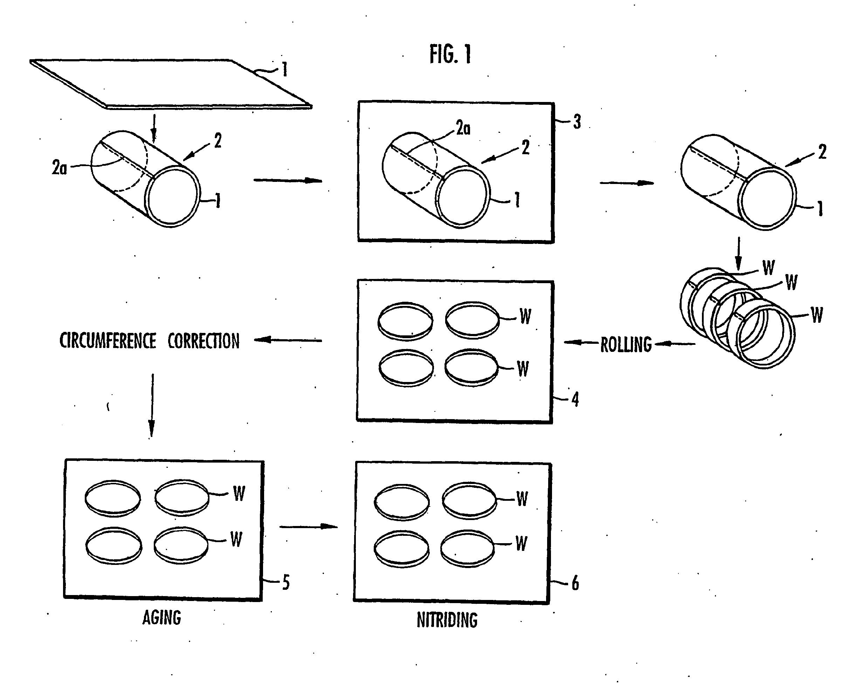

To produce the above metal ring, first, as shown in FIG. 1, a thin plate 1 made of maraging steel is bended in a loop, and one edge of the plate is welded to the other edge, so as to form a cylindrical drum 2. The above maraging steel is low-carbon steel comprising 0.03% or less C, 0.10% or less Si, 0.10% or less Mn, 0.01% or less P, and 0.01% or less S. It is what is called 18% Ni steel comprising 18% to 19% Ni, 4.7% to 5.2% Mo, 0.05% to 0.15% Al, 0.50% to 0.70% Ti, and 8.5% to 9.5% Co. Since the above maraging steel shows age hardening by the heat of welding, both sides of the welded portion 2a of the drum 2 become hardened.

Hence, the drum 2 is then placed in a vacuum furnace 3 and maintained at a temperature of 820°C to 830°C for 20 to 60 minutes, so that the first solution treatment is carried out and uneven hardness is eliminated. After completion of the above first solution treatment, the drum 2 is carried away from the vacuum furnace 3, and it is cut to a certain width, so as to form a metal ring W.

The thus formed metal ring W is then rolled at a draft of 40% to 50%. The metal ring W is rolled to a thickness of 0.2 mm by the above rolling, and rolled tissues are formed to a thickness of approximately 30 µm from the surface. Thus, the rolled metal ring W is placed in a heating furnace 4 and subjected to the second solution treatment, so that the above rolled tissues are eliminated, and that uniform metal crystal grains are formed.

Thereafter, the solution-treated metal ring W is subjected to circumference correction, and it is then placed in a heating furnace 5, where it is maintained at a temperature ranging between 440°C and 480°C for 60 to 120 minutes to carry out aging treatment. After completion of the aging treatment, the metal ring W is cooled in the heating furnace 5 and then transferred into a heating furnace 6 that is a nitriding apparatus, so as to carry out a nitriding processing.

In the nitriding processing in the present embodiment, first, the above aging-treated metal ring W is placed in the heating furnace 6, and it is heated in the presence of a chloride gas such as methylene chloride at a temperature ranging between 440°C and 490°C for 1 to 10 minutes. In many cases, an oxide film is formed on the surface of the metal ring W. However, when the oxide film is heated in the presence of the above chloride gas, the film is reacted with chloride and eliminated, and instead, a chloride film is formed on the surface of the metal ring W.

After completion of the heating in the presence of the chloride gas, the chloride gas is exhausted, and further, the pressure in the heating furnace 6 is reduced to a vacuum or reduced pressure atmosphere of less than 10⁻³ Pa. Then, the metal ring W on which the above chloride film is formed is heated under the above vacuum or reduced pressure atmosphere at a temperature ranging between 450°C and 490°C for 5 to 10 minutes. It should be noted that air is always exhausted from the heating furnace 6 so as to maintain the above vacuum or reduced pressure atmosphere.

By the above step, a chloride gas is generated as a result of the decomposition of the chloride film, and the chloride gas is exhausted. At the same time, the surface of the metal ring W becomes clean and activated by decomposition and elimination of the chloride film.

After completion of the heating under the above vacuum or reduced pressure atmosphere, an atmosphere containing at least an ammonia gas is introduced into the heating furnace 6. Thereafter, the metal ring W is nitrided by heating under the above atmosphere at a temperature ranging between 440°C and 490°C for 30 to 120 minutes.

In the present embodiment, when the metal ring W is heated under an atmosphere containing the above ammonia gas, no chloride film is present on the surface of the metal ring W, and as stated above, the surface is clean and activated. Accordingly, the generation of hydrogen chloride as a result of the reaction between hydrogen generated as a result of the decomposition of ammonia and the above chloride film does not take place. Thus, the surface of the metal ring W is prevented from being damaged by hydrogen chloride, and so it is free from the resulting defects. Moreover, since the surface of the metal ring W is clean and activated, a uniform nitrided layer can be formed.

In the present embodiment, a case where an oxide film is eliminated from the surface of the metal ring W using a chloride gas is explained. However, a halogen compound gas such as a fluorine gas or bromine gas may also be used instead of a chloride gas.

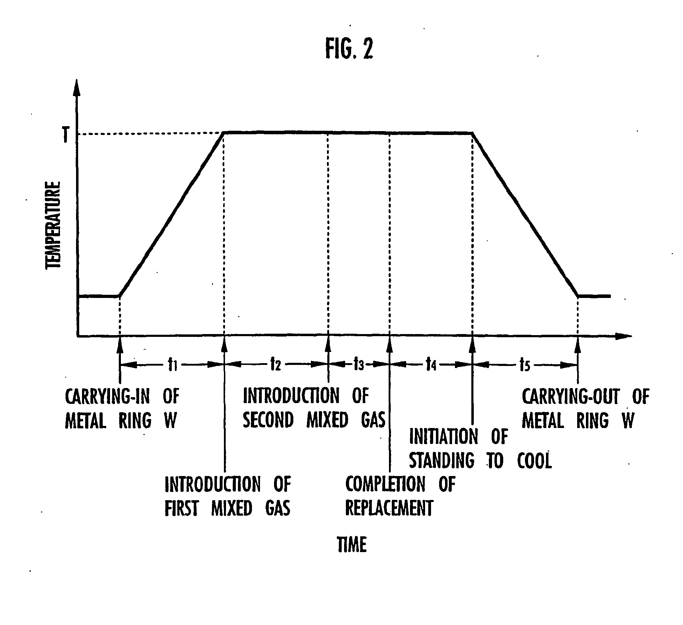

In the above nitriding processing, as shown in FIG. 2, first, the inside of the heating furnace 6 is heated from room temperature to a certain nitriding processing temperature for a predetermined time t₁. The inside of the heating furnace 6 is set under a nitrogen atmosphere, and the above nitriding processing temperature is set within the range between 450°C and 500°C.

After the temperature in the heating furnace 6 reaches the above nitriding processing temperature, the first mixed gas is introduced into the furnace 6. The first mixed gas consists of 50% to 90% ammonia by volume, 0.5% to 4.5% air by volume, and a residual volume consisting of nitrogen. The air contains approximately 20% oxygen by volume, and thus, the above first mixed gas consists of 50% to 90% ammonia by volume, 0.1% to 0.9% oxygen by volume, and a residual volume substantially consisting of nitrogen. The metal ring W is maintained under an atmosphere containing the above first mixed gas for a predetermined time t₂ at the above nitriding processing temperature, so as to form a nitrided layer on the surface thereof.

After formation of the nitrided layer on the surface of the metal ring W, the second mixed gas is introduced into the heating furnace 6, and the above first mixed gas is replaced by the second mixed gas during a predetermined time t₃. The second mixed gas consists of 0% to 25% ammonia by volume and a residual volume consisting of nitrogen. After the first mixed gas in the atmosphere in the heating furnace 6 is replaced by the second mixed gas, the metal ring W is further maintained under an atmosphere containing the above second mixed gas for a predetermined time t₄ at the above nitriding processing temperature, so as to complete nitriding of the metal ring W.

Herein, the processing time (t₂ + t₃ + t₄) to maintain the metal ring at the above nitriding processing temperature to carry out the above nitriding processing is set within the range between 30 to 120 minutes. Moreover, after the time t₂ to maintain the metal ring at the above nitriding processing temperature under the above first mixed gas atmosphere has passed, the time to introduce the second mixed gas is set within the range from the one-third to one-half of the above processing time. As a result, there can be obtained a metal ring W, which has an improved hardness because of a nitrided layer formed on the surface and a toughness maintained in a non-nitrided portion thereinside. Moreover, the above metal ring W has a structure such that the hardness of the nitrided layer decreases at a certain level depending on the depth from the surface, and because of such a nitrided layer, the metal ring W can obtain a further excellent toughness.

Thereafter, the heating furnace 6 is left to cool for a predetermined time t₅, so that the above nitriding processing temperature is cooled to room temperature, and the nitriding processing is terminated. Thereafter, the metal ring W on the surface of which a nitrided layer is formed is carried away from the heating furnace 6.

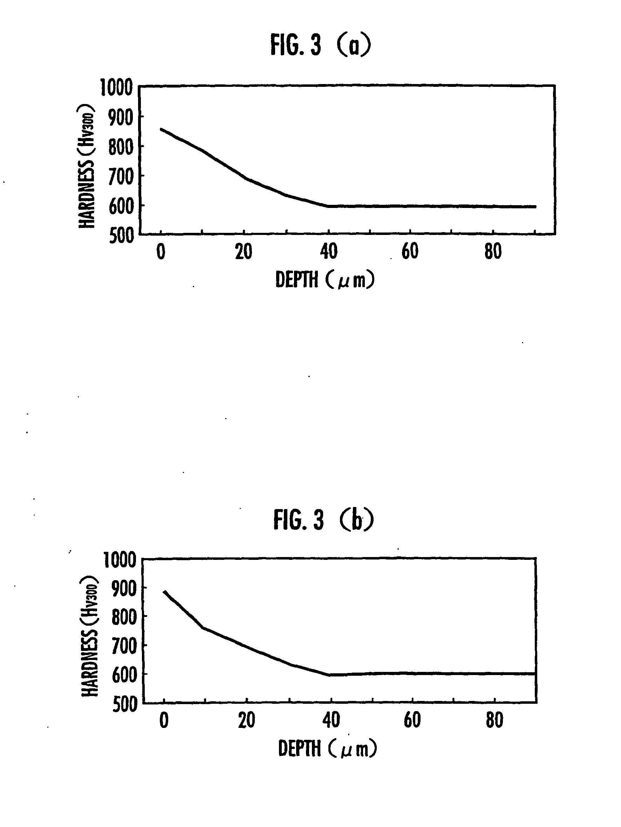

FIG. 3(a) shows the relationship between a depth from the surface and hardness of the metal ring W obtained by the method in the present embodiment. In addition, FIG. 3(b) shows the relationship between a depth from the surface and hardness of the metal ring W, which is obtained by the conventional method in which the heating furnace 6 is filled with the first mixed gas throughout the above processing time (t₂ + t₃ + t₄), and the first mixed gas is not replaced by the second mixed gas.

As shown in FIG. 3(a), the outermost of the metal ring W obtained by the method in the present embodiment has an excellent hardness of 800 or more based on Vickers hardness (Hv_{0.3}). Moreover, the metal ring comprises a non-nitrided portion with a constant hardness deeper than 40 µm from the surface. At the same time, the metal ring comprises a nitrided layer formed until a depth 40 µm from the surface, wherein hardness decreases at a certain level. Accordingly, the metal ring W obtained by the method in the present embodiment has toughness provided by the nitrided layer with the above described structure, as well as toughness provided by the non-nitrided portion thereinside. Thus, it is clear that the metal ring has an excellent toughness.

On the other hand, as shown in FIG. 3(b), the metal ring W obtained by the conventional method has the same structure as the metal ring W obtained by the method in the present embodiment, in that it has a hardness of 800 or more based on Vickers hardness (Hv_{0.3}) outermost sureface, and in that it comprises a non-nitrided portion with a constant hardness deeper than 40 µm from the surface.

However, in the metal ring W obtained by the conventional method, hardness sharply decreases within a depth range of 10 µm from the surface, and therefore the metal ring does not have a structure such that hardness decreases at a certain level until a depth 40 µm from the surface. Accordingly, it is clear that the metal ring W obtained by the conventional method cannot obtain toughness other than the toughness provided by the non-nitrided portion thereinside.

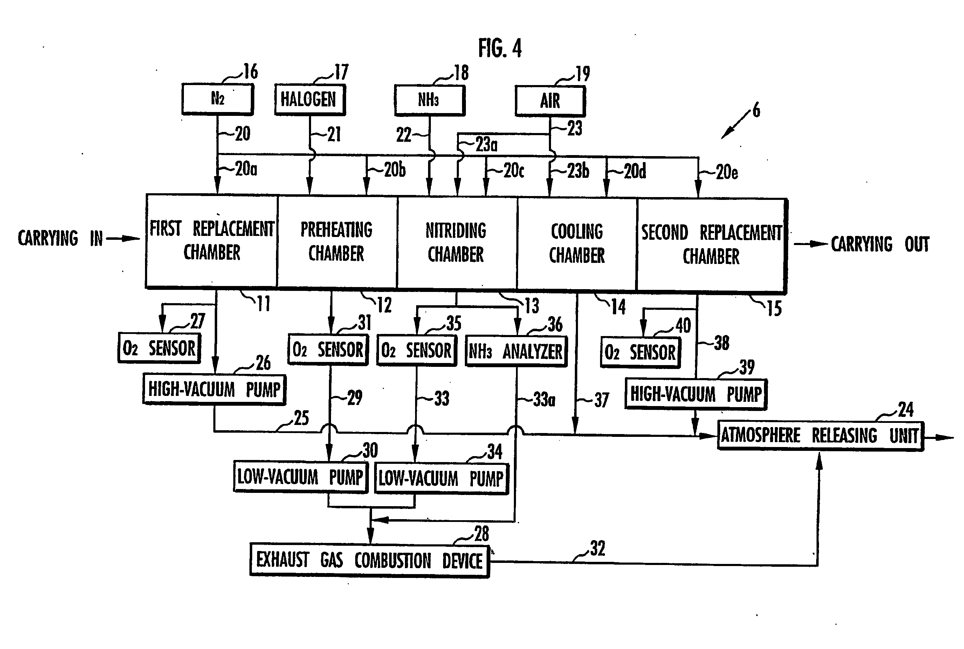

The nitriding processing method in the present embodiment can be carried out using a nitriding apparatus 6 as shown in FIG. 4.

As shown in Fig. 4, the nitriding apparatus 6 in the present embodiment comprises a first replacement chamber 11, a preheating chamber 12, a nitriding chamber 13, a cooling chamber 14, and a second replacement chamber 15. The above each chamber comprises an door that is established at the border of each chamber and freely moves up and down (not shown), and the chambers can be connected to each other by opening or closing the door. Moreover, the first replacement chamber 11 comprises a carrying-in door that flexibly moves up and down (not shown) on the opposite side of the preheating chamber 12, whereas the second replacement chamber 15 comprises a carrying-out door that flexibly moves up and down (not shown) on the opposite side of the cooling chamber 14. It is noted that all of the above doors are closed in an ordinary state.

Moreover, the nitriding apparatus 6 comprises transferring means for intermittently transferring the metal ring W in the direction from the first replacement chamber 11 to the second replacement chamber 15, while the processing is carried out in the above each chamber (not shown). An example of the above transferring means may include a belt conveyor, which is established through the first replacement chamber 11, the preheating chamber 12, the nitriding chamber 13, the cooling chamber 14, and the second replacement chamber 15. Furthermore, each of the preheating chamber 12 and the nitriding chamber 13 comprises heating means for heating the inside thereof (not shown).

The nitriding apparatus 6 further comprises a nitrogen gas source 16, a halogen compound gas source 17, an ammonia gas source 18, and an air (oxygen gas) source 19. The nitrogen gas source 16 is connected to a nitrogen gas pipe 20. A nitrogen gas branch pipe 20a branching from the nitrogen gas pipe 20 is connected to the first replacement chamber 11. A nitrogen gas branch pipe 20b is connected to the preheating chamber 12, a nitrogen gas branch pipe 20c is connected to the nitriding chamber 13, a nitrogen gas branch pipe 20d is connected to the cooling chamber 14, and a nitrogen gas branch pipe 20e is connected to the second replacement chamber 15.

Moreover, the halogen compound gas source 17 is connected to the preheating chamber 12 through a halogen compound gas pipe 21, and the ammonia gas source 18 is connected to the nitriding chamber 13 through an ammonia gas pipe 22. Furthermore, the air source 19 is connected to an air pipe 23, an air branch pipe 23a branching from the air pipe 23 is connected to the nitriding chamber 13, and an air branch pipe 23b is connected to the cooling chamber 14.

The first replacement chamber 11 comprises an exhaust pipe 25 connected to an atmosphere releasing unit 24. On the exhaust pipe 25, a high-vacuum pump 26 for discharging the atmosphere in the first replacement chamber 11 and an oxygen sensor 27 for measuring the oxygen level in the exhausted air are established.

The preheating chamber 12 comprises an exhaust pipe 29 connected to an exhaust gas combustion device 28. On the exhaust pipe 29, a low-vacuum pump 30 for discharging the atmosphere in the preheating chamber 12 and an oxygen sensor 31 for measuring the oxygen level in the exhausted air are established. The exhaust gas combustion device 28 is connected to the atmosphere releasing unit 24 through a combustion gas pipe 32.

The nitriding chamber 13 comprises an exhaust pipe 33 connected to the exhaust gas combustion device 28. On the exhaust pipe 33, a low-vacuum pump 34 for discharging the atmosphere in the nitriding chamber 13 and an oxygen sensor 35 for measuring the oxygen level in the exhausted air are established. The exhaust pipe 33 comprises an air exhaust branch pipe 33a, which branches from the exhaust pipe 33 to connect to the exhaust gas combustion device 28. On the air exhaust branch pipe 33a, an ammonia analyzer 36 for measuring the ammonia level in the exhausted air is established.

The cooling chamber 14 comprises an exhaust pipe 37 connected to the atmosphere releasing unit 24, and the second replacement chamber 15 comprises an exhaust pipe 38 connected to the atmosphere releasing unit 24. On the exhaust pipe 38, a high-vacuum pump 39 for discharging the atmosphere in the second replacement chamber 15 and an oxygen sensor 40 for measuring the oxygen level in the exhausted air are established.

In the present embodiment, the preheating chamber 12 and the nitriding chamber 13 both comprise the common exhaust gas combustion device 28. However, it may also be possible that each of the preheating chamber 12 and the nitriding chamber 13 comprises an exhaust gas combustion device, independently.

Next, the actuation of the nitriding apparatus 6 in the present embodiment will be explained.

In the nitriding apparatus 6, first, a carrying-in door of the first replacement chamber 11 that is not shown in the figure is opened, and the metal ring W is then carried in the first replacement chamber 11 by transferring means not shown in the figure. Thereafter, the above carrying-in door is closed, and the high-vacuum pump 26 is actuated, so that the atmosphere in the first replacement chamber 11 is exhausted to the atmosphere releasing unit 24 through the exhaust pipe 25. Simultaneously, nitrogen is introduced from the nitrogen gas source 16 into the first replacement chamber 11 through the nitrogen gas pipe 20 and the nitrogen gas branch pipe 20a. When the oxygen level detected by the oxygen sensor 27 becomes less than a certain value, it is determined that the atmosphere in the first replacement chamber 11 is replaced by a nitrogen gas, and the action of the high-vacuum pump 26 is terminated.

Thereafter, an door located between the first replacement chamber 11 and the preheating chamber 12, which is not shown in the figure, is opened, and the metal ring W is transferred into the preheating chamber 12 by the above transferring means. When the metal ring W is accommodated in the preheating chamber 12, the door located between the first replacement chamber 11 and the preheating chamber 12 is closed, and the inside of the preheating chamber 12 is then heated by heating means not shown in the figure.

At this time, a nitrogen gas is introduced into the preheating chamber 12 from the nitrogen gas source 16 through the nitrogen gas pipe 20 and the nitrogen gas branch pipe 20b, and a halogen compound gas such as methylene chloride is also introduced therein from the halogen compound gas source 17 through the halogen compound gas pipe 21. Accordingly, the atmosphere in the preheating chamber 12 is replaced by an atmosphere containing a mixed gas consisting of 1.0% to 20.0% halogen compound gas by volume and the balance of nitrogen.

To replace the atmosphere in the preheating chamber 12, first, the low-vacuum pump 30 is actuated, and thereby the atmosphere in the preheating chamber 12 is released to the atmosphere releasing unit 24 through the exhaust pipe 29, the exhaust gas combustion device 28, and the combustion gas pipe 32. When the oxygen level detected by the oxygen sensor 31 becomes less than a certain value, the action of the low-vacuum pump 30 is terminated, and a nitrogen gas and a halogen compound gas are introduced into the preheating chamber 12 from the nitrogen gas source 16 and the halogen compound gas source 17, respectively.

When the metal ring W is heated under the above atmosphere at a temperature ranging between 440°C and 490°C for 1 to 10 minutes, an oxide film formed on the surface of the metal ring W is reacted with the halogen compound and eliminated therefrom, and instead, a halogenous compound film is formed. After completion of the heating in the presence of the above chloride gas, the low-vacuum pump 30 is actuated, and the atmosphere in the preheating chamber 12 is exhausted to the atmosphere releasing unit 24 to further reduce the pressure, so that the pressure in the preheating chamber 12 is reduced to a vacuum or reduced pressure atmosphere of less than 10⁻³ Pa. Thereafter, the metal ring W on which the above halogenous compound film is formed is heated under the above vacuum or reduced pressure atmosphere at a temperature ranging between 450°C and 490°C for 5 to 10 minutes. It is noted that air is always exhausted from the preheating chamber 12 so as to maintain the above vacuum or reduced pressure atmosphere. By the above step, the above halogenous compound film is decomposed and exhausted as a halogen compound gas, whereas the surface of the metal ring W becomes clean and activated.

After completion of the heating under the above vacuum or reduced pressure atmosphere, the action of the low-vacuum pump 30 is terminated, and a nitrogen gas is introduced into the preheating chamber 12 from the nitrogen gas source 16. Then, the temperature inside the preheating chamber 12 is raised to a temperature ranging between 450°C and 500°C during a predetermined time t₁.

When the inside of the preheating chamber 12 is raised to a temperature ranging between 450°C and 500°C, an door located between the preheating chamber 12 and the nitriding chamber 13, which is not shown in the figure, is opened, and the metal ring W is transferred into the nitriding chamber 13 by the above transferring means. After the metal ring W is accommodated in the nitriding chamber 13, the door located between the preheating chamber 12 and the nitriding chamber 13 is closed. The metal ring W is maintained in the nitriding chamber 13 until a processing time of 30 to 120 minutes passes, so as to carry out a nitriding processing.

At this time, a nitrogen gas is introduced into the nitriding chamber 13 from the nitrogen gas source 16 through the nitrogen gas pipe 20 and the nitrogen gas branch pipe 20c, an ammonia gas is introduced therein from the ammonia gas source 18 through the ammonia gas pipe 22, and air is introduced therein from the air source 19 through the air pipe 23 and the air branch pipe 23a. Accordingly, the atmosphere in the nitriding chamber 13 is replaced by an atmosphere containing the first mixed gas consisting of 50% to 90% ammonia gas by volume, 0.1% to 0.9% oxygen by volume, and a residual volume consisting of nitrogen. The nitriding chamber is heated to a temperature ranging between 450°C and 500°C by heating means that is not shown in the figure.

To replace the atmosphere in the nitriding chamber 13, first, the low-vacuum pump 34 is actuated, and thereby the atmosphere in the nitriding chamber 13 is released to the atmosphere releasing unit 24 through the exhaust pipe 33, the air exhaust branch pipe 33a, the exhaust gas combustion device 28, and the combustion gas pipe 32. Simultaneously, a nitrogen gas, an ammonia gas, and air are introduced into the nitriding chamber 13 from the nitrogen gas source 16, the ammonia gas source 18, and the air source 19, respectively. Thereafter, when each of the oxygen level detected by the oxygen sensor 35 and the ammonia level detected by the ammonia analyzer 36 reaches within the range to constitute the above first mixed gas, the action of the low-vacuum pump 34 is terminated.

To carry out the above nitriding processing, first, the inside of the nitriding chamber 13 is maintained under the first mixed gas atmosphere for a predetermined time t₂ at a temperature ranging between 450°C and 500°C, so that a nitrided layer is formed on the surface of the metal ring W. When the above predetermined time t₂ has passed, the low-vacuum pump 34 is actuated again, so that the first mixed gas filled in the nitriding chamber 13 is released to the atmosphere releasing unit 24 through the exhaust pipe 33, the air exhaust branch pipe 33a, the exhaust gas combustion device 28, and the combustion gas pipe 32. Simultaneously, a nitrogen gas and an ammonia gas are introduced into the nitriding chamber 13 from the nitrogen gas source 16 and the ammonia gas source 18, respectively. When the ammonia level detected by the ammonia analyzer 36 reaches within a range between 0% to 25% ammonia by volume, the action of the low-vacuum pump 34 is terminated. As a result, the atmosphere filled in the nitriding chamber 13 is replaced by the second mixed gas atmosphere consisting of 0% to 25% ammonia gas by volume and a residual volume consisting of nitrogen.

The replacement of the first mixed gas atmosphere by the second mixed gas atmosphere is carried out during a predetermined time t₃. Moreover, after the predetermined time t₂ has passed, the time to start to introduce the second mixed gas is set within the range from the one-third to one-half of the above processing time.

For the above nitriding processing, thereafter, the inside of the nitriding chamber 13 is maintained under the above second mixed gas atmosphere at the above temperature ranging between 450°C and 500°C for a predetermined time t₄ until the above processing time passes, so as to complete the nitriding of the metal ring W.

Thereafter, when the above predetermined time t₄ has passed and the above nitriding processing has completed, an door located between the nitriding chamber 13 and the cooling chamber 14, which is not shown in the figure, is opened, and the metal ring W is transferred into the cooling chamber 14 by the above transferring means. After the metal ring W is accommodated in the cooling chamber 14, the door located between the nitriding chamber 13 and the cooling chamber 14 is closed, followed by a cooling treatment.

The cooling treatment is carried out using a nitrogen gas introduced from the nitrogen gas source 16 through the nitrogen gas pipe 20 and the nitrogen gas branch pipe 20d, and air introduced from the air source 19 through the air pipe 23 and the air branch pipe 23b. As a result, the inside of the cooling chamber 14 is cooled to room temperature during a predetermined time t₅. The above nitrogen gas and air are exhausted to the atmosphere releasing unit 24 through the exhaust pipe 37.

When the inside of the cooling chamber 14 is cooled to room temperature, an door located between the cooling chamber 14 and the second replacement chamber 15, which is not shown in the figure, is opened, and the metal ring W is transferred into the second replacement chamber 15 by the above transferring means. After the metal ring W is accommodated in the second replacement chamber 15, the door located between the cooling chamber 14 and the second replacement chamber 15 is closed, and the atmosphere filled in the second replacement chamber 15 is replaced by a nitrogen atmosphere.

The replacement of the atmosphere filled in the second replacement chamber 15 is carried out by actuating the high-vacuum pump 39 and exhausting the atmosphere filled in the second replacement chamber 15 to the atmosphere releasing unit 24 through the exhaust pipe 38, and at the same time, introducing nitrogen therein from the nitrogen gas source 16 through the nitrogen gas pipe 20 and the nitrogen gas branch pipe 20e. When the oxygen level detected by the oxygen sensor 40 becomes less than a certain value, it is determined that the atmosphere in the second replacement chamber 15 is replaced by a nitrogen gas, and the action of the high-vacuum pump 39 is terminated.

When the atmosphere in the second replacement chamber 15 is replaced by a nitrogen atmosphere, a carrying-out door not shown in the figure is opened, and the metal ring W is carried away from the nitriding apparatus 6 by the above transferring means.

In the nitriding apparatus 6 in the present embodiment, the operations of the above transferring means, the doors, the vacuum pumps 26, 30, 34 and 39, the nitrogen gas source 16, the halogen compound gas source 17, the ammonia gas source 18, the air source 19, and others may be controlled manually, or they may be controlled by controlling means such as a computer comprising CPU, ROM, RAM, etc. In the use of a computer, the operations may also be controlled by the detection values of the oxygen sensors 27, 31, 35 and 40 and that of the ammonia analyzer 36.

In the present embodiment, the halogen compound gas source 17 is established to introduce a halogen compound gas into the preheating chamber 12, but it may also be possible not to introduce the halogen compound gas into the preheating chamber 12.

Moreover, in the present embodiment, the air source 19 is established to introduce air into the nitriding chamber 13 and to form the first mixed gas. However, it may be possible to introduce other types of oxygen-containing gas instead of air, or it may also be possible to introduce a pure oxygen gas.

The atmosphere in the preheating chamber 12 contains a halogen compound and the atmosphere in the nitriding chamber 13 contains an ammonia gas. Accordingly, if they are exhausted as are, they are considered to cause air pollution. However, in the nitriding apparatus 6 in the present embodiment, both the atmosphere in the preheating chamber 12 and the atmosphere in the nitriding chamber 13 are burned in the exhaust gas combustion device 28, and they are rendered harmless before releasing to the atmosphere releasing unit 24, and thus, they can be prevented from causing air pollution.

### Industrial Applicability

The present invention can be used for the nitriding processing of a metal ring made of maraging steel, which is used for a belt for continuously variable transmission and the like.

## Claims

1. A method of nitriding a metal ring (W) made of maraging steel, comprising the steps of:
heating the metal ring made of maraging steel in the presence of a halogen compound gas, so as to eliminate an oxide film from the surface of the metal ring and to form a halogenous compound film;
heating the metal ring made of maraging steel on which said halogenous compound film is formed under a vacuum or reducedpressure atmosphere, so as to eliminate said halogenous compound film; and
heating the metal ring made of maraging steel from which said halogenous compound film is eliminated in the presence of an ammonia gas, so as to carry out nitriding.

2. The method of nitriding a metal ring made of maraging steel according to claim 1, wherein the elimination of said halogenous compound film is carried out by heating the metal ring made of maraging steel, on which said halogenous compound film is formed, under a vacuum or reduced pressure atmosphere at a temperature ranging from 450°C to 490°C for 5 to 10 minutes.

3. The method of nitriding a metal ring made of maraging steel according to claim 1, wherein said halogen compound gas is one type of gas selected from a group consisting of a fluorine compound gas, a chlorine compound gas, and a bromine compound gas.

4. The method of nitriding a metal ring made of maraging steel according to claim 1, wherein said nitriding is carried out by maintaining the metal ring made of maraging steel under an atmosphere comprising at least ammonia at a processing temperature ranging from 450°C to 500°C for a processing time ranging from 30 to 120 minutes.

5. The method of nitriding a metal ring made of maraging steel according to claim 4, wherein said nitriding comprises the steps of:
placing said metal ring into a heating furnace (6) and raising the temperature inside the heating furnace to said processing temperature;
introducing a first mixed gas consisting of 50% to 90% by volume of ammonia, 0.1% to 0.9% by volume of oxygen, and the residual volume substantially consisting of nitrogen into said heating furnace at the raised processing temperature, and maintaining the furnace inside at the processing temperature, so as to form a nitrided layer on the surface of the metal ring; and
when one-third to one-half of the processing time has passed, replacing the atmosphere inside said heating furnace by a second mixed gas consisting of 0% to 25% by volume of ammonia and a residual volume consisting of nitrogen, and maintaining the furnace inside at the processing temperature until the remaining processing time passes.

6. The method of nitriding a metal ring made of maraging steel according to claim 5, wherein said first mixed gas consists of 50% to 90% by volume of ammonia, 0.5% to 4.5% by volume of air, and a residual volume consisting of nitrogen.

7. A nitriding apparatus for nitriding a metal ring (W) made of maraging steel, which heats a metal ring made of maraging steel in the presence of a halogen compound gas to eliminate an oxide film from the surface of the metal ring, and then maintains the metal ring under an atmosphere comprising at least ammonia at a processing temperature ranging from 450°C to 500°C for a processing time ranging from 30 to 120 minutes, so as to carry out nitriding,
said nitriding apparatus, comprising a preheating chamber (12) and a nitriding chamber (13),
said preheating chamber comprising first heating means for heating the inside of said preheating chamber to said processing temperature when the chamber accommodates the metal ring, halogen compound gas introducing means (17, 21) for introducing a halogen compound gas into said preheating chamber, and first exhausting means (29, 30) comprising a low-vacuum pump (30) suitable for exhausting the atmosphere inside said preheating chamber and for reducing the pressure in the preheating chamber to below 10⁻³ Pa,
wherein the metal ring is heated by said first heating means in the presence of a halogen compound gas introduced by said halogen compound gas introducing means, so as to eliminate an oxide film from the surface of the metal ring and to form a halogenous compound film, and after the formation of said halogenous compound film, the atmosphere inside said preheating chamber is exhausted by said first exhausting means to reduce the pressure in said preheating chamber, the metal ring is then heated by said first heating means under a vacuum or reduced pressure atmosphere, so as to eliminate the halogenous compound film, and after the elimination of said halogenous compound film, the inside of said preheating chamber is heated to the processing temperature by said first heating means, and
said nitriding chamber comprising second heating means for heating the inside of said nitriding chamber to said processing temperature and maintaining the furnace inside at the temperature, nitrogen gas introducing means (16, 20, 20, 20c) for introducing a nitrogen gas into said nitriding chamber, ammonia gas introducing means (18, 22) for introducing an ammonia gas into said nitriding chamber, oxygen gas introducing means (19, 23, 23a) for introducing an oxygen gas into said nitriding chamber, and second exhausting means (33, 34) for exhausting the atmosphere inside said nitriding chamber,
wherein a first mixed gas consisting of 50% to 90% by volume of ammonia, 0.1% to 0.9% by volume of oxygen, and a residual volume substantially consisting of nitrogen is generated from the nitrogen gas introduced by said nitrogen gas introducing means, the ammonia gas introduced by said ammonia gas introducing means, and the oxygen gas introduced by said oxygen gas introducing means, and the metal ring is transferred from said preheating chamber into said nitriding chamber under the first mixed gas atmosphere, so as to form a nitrided case on the surface of the metal ring,
when one-third to one-half of the processing time has passed, while the first mixed gas is exhausted by said second exhausting means, a second mixed gas consisting of 0% to 25% by volume of ammonia and a residual volume consisting of nitrogen is generated from nitrogen gas introduced by said nitrogen gas introducing means and ammonia gas introduced by said ammonia gas introducing means, and the atmosphere inside said nitriding chamber is replaced by the second mixed gas,
thereafter, the metal ring is maintained in said nitriding chamber under the second mixed gas atmosphere until the remaining processing time passes.

8. The nitriding apparatus according to claim 7, comprising a first combustion device (28) for burning the atmosphere removed from said preheating chamber by said first exhausting means.

9. The nitriding apparatus according to claim 7, comprising a second combustion device for burning the atmosphere removed from said nitriding chamber by said second exhausting means.

10. The nitriding apparatus according to claim 7, wherein said preheating chamber comprises an door that is established between said preheating chamber and said nitriding chamber and flexibly moves up and down, and that said preheating chamber can be connected to said nitriding chamber through said door.

11. The nitriding apparatus according to claim 7, comprising transferring means for intermittently transferring the metal ring from said preheating chamber to said nitriding chamber.

## Patentansprüche

1. Verfahren zum Nitrieren eines aus martensitaushärtendem Stahl hergestellten Metallrings (W), umfassend die folgenden Schritte:
Erwärmen des Metallrings aus martensitaushärtendem Stahl in Anwesenheit eines Halogenverbindungsgases, so dass ein Oxidfilm von der Oberfläche des Metallrings eliminiert wird und ein Halogenverbindungsfilm gebildet wird.
Erwärmen des Metallrings aus martensitaushärtendem Stahl, auf dem der Halogenverbindungsfilm gebildet ist, unter einer Vakuum- oder Niederdruckatmosphäre, so dass der Halogenverbindungsfilm eliminiert wird; und
Erwärmen des Metallrings aus martensitaushärtendem Stahl, von dem der Film aus der Halogenverbindung eliminiert ist, in Anwesenheit eines Ammoniakgases, so dass das Nitrieren erfolgt.

2. Verfahren zum Nitrieren eines Metallrings aus martensitaushärtendem Stahl nach Anspruch 1, wobei der Halogenverbindungsfilm durch Erwärmen des Metallrings aus martensitaushärtendem Stahl, auf dem der Halogenverbindungsfilm gebildet ist, unter einer Vakuum- oder Niederdruckatmosphäre bei einer Temperatur im Bereich von 450°C bis 490°C für 5 bis 10 min eliminiert wird.

3. Verfahren zum Nitrieren eines Metallrings aus martensitaushärtendem Stahl nach Anspruch 1, wobei es sich bei dem Halogenverbindungsgas um einen Gastyp handelt, der ausgewählt ist aus der Gruppe, bestehend aus einem Fluorverbindungsgas, einem Chlorverbindungsgas und einem Bromverbindungsgas.

4. Verfahren zum Nitrieren eines Metallrings aus martensitaushärtendem Stahl nach Anspruch 1, wobei die Nitrierung durch Halten des Metallrings aus martensitaushärtendem Stahl unter einer Atmosphäre, die zumindest Ammoniak umfasst, bei einer Verarbeitungstemperatur im Bereich von 450°C bis 500°C für eine Verarbeitungszeit im Bereich von 30 bis 120 min erfolgt.

5. Verfahren zum Nitrieren eines Metallrings aus martensitaushärtendem Stahl nach Anspruch 4, wobei die Nitrierung die folgenden Schritte umfasst:
Unterbringen des Metallrings in einem Wärmeofen (6) und Erhöhen der Temperatur im Inneren des Wärmeofens auf die Verarbeitungstemperatur;
Einbringen eines ersten Mischgases, das aus 50 bis 90 Volumenprozent Ammoniak, 0,1 bis 0,9 Volumenprozent Sauerstoff, und dem im Wesentlichen aus Stickstoff bestehenden Restvolumen besteht, in den Wärmeofen bei einer erhöhten Verarbeitungstemperatur, und Halten des Ofeninnenraums bei der Verarbeitungstemperatur, so dass eine nitrierte Schicht auf der Oberfläche des Metallrings gebildet wird; und
wenn ein Drittel bis zur Hälfte der Verarbeitungszeit verstrichen ist, Ersetzen der Atmosphäre im Inneren des Wärmeofens durch ein zweites Mischgas, das aus 0 bis 25 Volumenprozent Ammoniak und einem aus Stickstoff bestehenden Restvolumen besteht, und Halten des Ofeninnenraums bei der Verarbeitungstemperatur, bis die verbleibende Verarbeitungszeit verstrichen ist.

6. Verfahren zum Nitrieren eines Metallrings aus martensitaushärtendem Stahl nach Anspruch 5, wobei das erste Mischgas aus 50 bis 90 Volumenprozent Ammoniak, 0,5 bis 4,5 Volumenprozent Luft und einem aus Stickstoff bestehenden Restvolumen besteht.

7. Nitriervorrichtung zum Nitrieren eines Metallrings (W) aus martensitaushärtendem Stahl, welche einen Metallring aus martensitaushärtendem Stahl in Anwesenheit eines Halogenverbindungsgases erwärmt, so dass ein Oxidfilm von der Oberfläche des Metallrings eliminiert wird und der Metallring dann unter einer Atmosphäre gehalten wird, die zumindest Ammoniak enthält, bei einer Verarbeitungstemperatur im Bereich von 450°C bis 500°C für eine Verarbeitungszeit im Bereich von 30 bis 120 min, so dass die Nitrierung erfolgt,
wobei die Nitriervorrichtung eine Vorwärmkammer (12) und eine Nitrierkammer (13) umfasst,
wobei die Vorwärmkammer umfasst erste Heizeinrichtungen zum Erwärmen des Inneren der Vorwärmkammer auf die Verarbeitungstemperatur, wenn die Kammer den Metallring aufnimmt, Halogenverbindungsgas-Zufuhreinrichtungen (17, 21) zum Einbringen eines Halogenverbindungsgases in die Vorwärmkammer, und erste Auslasseinrichtungen (29, 30), umfassend eine Niedervakuumpumpe (30), die sich zum Auslassen der Atmosphäre im Inneren der Vorwärmkammer und zum Reduzieren des Drucks in der Vorwärmkammer auf weniger als 10⁻³ Pa eignet,
wobei der Metallring durch die erste Heizeinrichtung in der Anwesenheit eines Halogenverbindungsgases erwärmt wird, das durch die Halogenverbindungsgas-Zufuhreinrichtung eingebracht wird, so dass ein Oxidfilm von der Oberfläche des Metallrings eliminiert wird, und ein Halogenverbindungsfilm gebildet wird, und nach der Bildung des Halogenverbindungsfilms die Atmosphäre in der Vorwärmkammer durch die erste Auslasseinrichtung abgelassen wird, so dass der Druck in der Vorwärmkammer vermindert wird, der Metallring dann durch die erste Heizeinrichtung unter einer Vakuum- oder Niederdruckatmosphäre erwärmt wird, so dass der Halogenverbindungsfilm eliminiert wird, und nach der Eliminierung des Halogenverbindungsfilms das Innere der Vorwärmkammer durch die erste Heizeinrichtung auf die Verarbeitungstemperatur erwärmt wird, und
die Nitrierkammer umfasst zweite Heizeinrichtungen zum Erwärmen des Inneren der Nitrierkammer auf die Verarbeitungstemperatur und Halten des Ofeninnenraums bei der Temperatur, Stickstoffgas-Zufuhreinrichtungen (16, 20, 20, 20c) zum Einbringen von Stickstoffgas in die Nitrierkammer, Ammoniakgas-Zufuhreinrichtungen (18, 22) zum Einbringen von Ammoniakgas in die Nitrierkammer, Sauerstoff-Zufuhreinrichtungen (19, 23, 23a) zum Einbringen von Sauerstoffgas in die Nitrierkammer und zweite Auslasseinrichtungen (33, 34) zum Auslassen der Atmosphäre im Inneren der Nitrierkammer,
wobei ein erstes Mischgas, das aus 50 bis 90 Volumenprozent Ammoniak, 0,1 bis 0,9 Volumenprozent Sauerstoff und einem im Wesentlichen aus Stickstoff bestehenden Restvolumen besteht, erzeugt wird aus dem Stickstoffgas, das durch die Stickstoffgas-Zufuhreinrichtung eingebracht wird, dem Ammoniakgas, das durch die Ammoniakgas-Zufuhreinrichtung eingebracht wird und dem Sauerstoffgas, das durch die Sauerstoffgas-Zufuhreinrichtung eingebracht wird, und der Metallring unter der ersten Mischgasatmosphäre aus der Vorwärmkammer in die Nitrierkammer überführt wird, so dass auf der Oberfläche des Metallrings eine nitrierte Außenschicht gebildet wird,
wenn ein Drittel bis zur Hälfte der Verarbeitungszeit verstrichen ist, während das erste Mischgas durch die zweite Auslasseinrichtung abgelassen wird, ein zweites Mischgas, das aus 0 bis 25 Volumenprozent Ammoniak und einem aus Stickstoff bestehenden Restvolumen besteht, erzeugt wird aus dem Stickstoffgas, das durch die Stickstoffgas-Zufuhreinrichtung eingebracht wird, und dem Ammoniakgas, das durch die Ammoniakgas-Zufuhreinrichtung eingebracht wird, und die Atmosphäre im Inneren der Nitrierkammer durch das zweite Mischgas ersetzt wird,
danach wird der Metallring in der Nitrierkammer unter der zweiten Mischgasatmosphäre gehalten, bis die restliche Verarbeitungszeit verstrichen ist.

8. Nitriervorrichtung nach Anspruch 7, umfassend eine erste Brennvorrichtung (28) zum Verbrennen der Atmosphäre, die durch die erste Auslasseinrichtung aus der Vorwärmkammer entfernt wurde.

9. Nitriervorrichtung nach Anspruch 7, umfassend eine zweite Brennvorrichtung zum Verbrennen der Atmosphäre, die durch die zweite Auslasseinrichtung aus der Nitrierkammer entfernt wurde.

10. Nitriervorrichtung nach Anspruch 7, wobei die Vorwärmkammer eine Tür umfasst, die sich zwischen der Vorwärmkammer und der Nitrierkammer befindet, und sich elastisch auf- und abbewegt, und die Vorwärmkammer durch die Tür mit der Nitrierkammer verbunden sein kann.

11. Nitriervorrichtung nach Anspruch 7, umfassend Überführungseinrichtungen zum periodischen Überführen des Metallrings aus der Vorwärmkammer in die Nitrierkammer.

## Revendications

1. Procédé de nitruration d'un anneau métallique (W) fait d'acier à vieillissement martensitique, comprenant les étapes consistant à :
- chauffer l'anneau métallique, fait d'acier à vieillissement martensitique, en présence d'un composé halogène gazeux, de manière à éliminer une pellicule d'oxyde à la surface de l'anneau métallique et à former une pellicule de composé halogène ;
- chauffer l'anneau métallique, fait d'acier à vieillissement martensitique, sur lequel ladite pellicule de composé halogène a été formée, sous un vide partiel ou dans une atmosphère à pression relative négative, de manière à éliminer ladite pellicule de composé halogène ; et
- chauffer l'anneau métallique, fait d'acier à vieillissement martensitique, duquel ladite pellicule de composé halogène a été éliminée, en présence de gaz ammoniac, de manière à effectuer une nitruration.

2. Procédé de nitruration d'un anneau métallique fait d'acier à vieillissement martensitique, selon la revendication 1, pour lequel l'élimination de ladite pellicule de composé halogène est effectuée en chauffant l'anneau métallique, fait d'acier à vieillissement martensitique, sur lequel ladite pellicule de composé halogène a été formée, sous un vide partiel ou dans une atmosphère à pression relative négative à une température comprise entre 450 °C et 490 °C pendant 5 à 10 minutes.

3. Procédé de nitruration d'un anneau métallique fait d'acier à vieillissement martensitique, selon la revendication 1, pour lequel ledit composé halogène gazeux est un type de gaz sélectionné parmi le groupe constitué par un composé de fluor gazeux, un composé de chlore gazeux et un composé de brome gazeux.

4. Procédé de nitruration d'un anneau métallique fait d'acier à vieillissement martensitique, selon la revendication 1, pour lequel ladite nitruration est effectuée en maintenant l'anneau métallique, fait d'acier à vieillissement martensitique, dans une atmosphère comprenant au moins de l'ammoniac à une température de traitement comprise entre 450 °C et 500 °C pendant une durée de traitement comprise entre 30 et 120 minutes.

5. Procédé de nitruration d'un anneau métallique fait d'acier à vieillissement martensitique, selon la revendication 4, pour lequel ladite nitruration comprend les étapes consistant à :
- placer ledit anneau métallique dans un four de réchauffage (6) et élever la température à l'intérieur du four de réchauffage jusqu'à ladite température de traitement ;
- introduire un premier mélange gazeux, constitué de 50 % à 90 % en volume d'ammoniac et de 0,1 % à 0,9 % en volume d'oxygène, le volume restant étant essentiellement constitué d'azote, dans ledit four de réchauffage à la température élevée de traitement et maintenir l'intérieur du four à la température de traitement, de manière à former une couche nitrurée à la surface de l'anneau métallique ; et
- lorsque de un tiers à la moitié de la durée de traitement s'est écoulé, remplacer l'atmosphère à l'intérieur dudit four de réchauffage par un deuxième mélange gazeux, constitué de 0 % à 25 % en volume d'ammoniac, le volume restant étant constitué d'azote, et maintenir l'intérieur du four à la température de traitement jusqu'à ce que le reste de la durée de traitement se soit écoulé.

6. Procédé de nitruration d'un anneau métallique fait d'acier à vieillissement martensitique, selon la revendication 5, pour lequel ledit premier mélange gazeux est constitué de 50 % à 90 % en volume d'ammoniac et de 0,5 % à 4,5 % en volume d'air, le volume restant étant constitué d'azote.

7. Appareil de nitruration pour nitrurer un anneau métallique (W) fait d'acier à vieillissement martensitique, qui chauffe un anneau métallique, fait d'acier à vieillissement martensitique, en présence d'un composé halogène gazeux pour éliminer une pellicule d'oxyde à la surface de l'anneau métallique, puis maintient l'anneau métallique dans une atmosphère comprenant au moins de l'ammoniac à une température de traitement comprise entre 450 °C et 500 °C pendant une durée de traitement comprise entre 30 et 120 minutes, de manière à effectuer une nitruration,
ledit appareil de nitruration comprenant une chambre de préchauffage (12) et une chambre de nitruration (13),
ladite chambre de préchauffage comprenant des premiers moyens de chauffage pour chauffer l'intérieur de ladite chambre de préchauffage jusqu'à ladite température de traitement lorsque la chambre reçoit l'anneau métallique, des moyens d'introduction de composé halogène gazeux (17, 21) pour introduire un composé halogène gazeux dans ladite chambre de préchauffage et des premiers moyens d'aspiration (29, 30) comprenant une pompe à vide partiel (30) adéquate à aspirer l'atmosphère à l'intérieur de ladite chambre de préchauffage et à réduire la pression absolue régnant dans cette chambre de préchauffage jusqu'au-dessous de 10⁻³ Pa,
dans lequel l'anneau métallique est chauffé par lesdits premiers moyens de chauffage en présence d'un composé halogène gazeux introduit par lesdits moyens d'introduction de composé halogène gazeux, de manière à éliminer une pellicule d'oxyde à la surface de l'anneau métallique et à former une pellicule de composé halogène, et, après la formation de ladite pellicule de composé halogène, l'atmosphère à l'intérieur de ladite chambre de préchauffage est aspirée par lesdits premiers moyens d'aspiration afin de réduire la pression absolue régnant dans ladite chambre de préchauffage, l'anneau métallique est ensuite chauffé par lesdits premiers moyens de chauffage sous un vide partiel ou dans une atmosphère à pression relative négative, de manière à éliminer la pellicule de composé halogène, et, après l'élimination de ladite pellicule de composé halogène, l'intérieur de ladite chambre de préchauffage est chauffé jusqu'à la température de traitement par lesdits premiers moyens de chauffage, et
ladite chambre de nitruration comprenant des deuxièmes moyens de chauffage, pour chauffer l'intérieur de ladite chambre de nitruration jusqu'à ladite température de traitement et maintenir l'intérieur du four à cette température, des moyens d'introduction d'azote gazeux (16, 20, 20, 20c) pour introduire de l'azote gazeux dans ladite chambre de nitruration, des moyens d'introduction d'ammoniac gazeux (18, 22) pour introduire de l'ammoniac gazeux dans ladite chambre de nitruration, des moyens d'introduction d'oxygène gazeux (19, 23, 23a) pour introduire de l'oxygène gazeux dans ladite chambre de nitruration, et des deuxièmes moyens d'aspiration (33, 34) pour évacuer l'atmosphère à l'intérieur de ladite chambre de nitruration,
dans lequel un premier mélange gazeux, constitué de 50 % à 90 % en volume d'ammoniac et de 0,1 % à 0,9 % en volume d'oxygène, le volume restant étant essentiellement constitué d'azote, est généré à partir de l'azote gazeux introduit par lesdits moyens d'introduction d'azote gazeux, de l'ammoniac gazeux introduit par lesdits moyens d'introduction d'ammoniac gazeux et de l'oxygène gazeux introduit par lesdits moyens d'introduction d'oxygène gazeux, et l'anneau métallique est transféré de ladite chambre de préchauffage à ladite chambre de nitruration dans l'atmosphère du premier mélange gazeux, de manière à former une enveloppe nitrurée à la surface de l'anneau métallique,
lorsque de un tiers à la moitié de la durée de traitement s'est écoulé, tandis que le premier mélange gazeux est évacué par lesdits deuxièmes moyens d'aspiration, un deuxième mélange gazeux, constitué de 0 % à 25 % en volume d'ammoniac, le volume restant étant constitué d'azote, est généré à partir de l'azote gazeux introduit par lesdits moyens d'introduction d'azote gazeux et de l'ammoniac gazeux introduit par lesdits moyens d'introduction d'ammoniac gazeux et l'atmosphère à l'intérieur de ladite chambre de nitruration est remplacée par le deuxième mélange gazeux,
après cela, l'anneau métallique est maintenu dans ladite chambre de nitruration dans l'atmosphère du deuxième mélange gazeux jusqu'à ce que le reste de la durée de traitement se soit écoulé.

8. Appareil de nitruration selon la revendication 7, comprenant un premier dispositif de combustion (28) pour brûler l'atmosphère extraite de ladite chambre de préchauffage par lesdits premiers moyens d'aspiration.

9. Appareil de nitruration selon la revendication 7, comprenant un deuxième dispositif de combustion pour brûler l'atmosphère extraite de ladite chambre de nitruration par lesdits deuxièmes moyens d'aspiration.

10. Appareil de nitruration selon la revendication 7, dans lequel ladite chambre de préchauffage comprend une porte, qui est établie entre ladite chambre de préchauffage et ladite chambre de nitruration et monte et descend de manière flexible, ladite chambre de préchauffage étant susceptible d'être connectée à ladite chambre de nitruration par ladite porte.

11. Appareil de nitruration selon la revendication 7, comprenant des moyens de transfert pour transférer par intermittence l'anneau métallique de ladite chambre de préchauffage à ladite chambre de nitruration.
